# EUROPEAN PATENT APPLICATION

(11) **EP 2 876 656 A1**
(43) Date of publication of application: **27.05.2015**
(21) Application number: 13194023.1
(22) Date of filing: 22.11.2013
(51) Int. Cl.: H01F 27/28, H02M 3/335, H01F 27/32

(54) **Converter unit for railway applications with planar transformer having an improved structure**

(71) Applicant: Albiero, Maurizio Luigi, 27022 Casorate Primo (PV) (IT)
(72) Inventor: Albiero, Maurizio Luigi, I-27022 Casorate Primo (PV) (IT)
(74) Representative: Botti, Mario

(57) **Abstract**

The present invention is concerned with a converter unit (1) for electric railway applications incorporating at least one power switch bridge circuit (40) and an LC circuit for the output of the switch bridge circuit (40) having a transformer (10) inserted in series with an inductive and a capacitive component. Advantageously, according to the invention, the transformer (10) is of the planar type and it comprises a primary winding (28) of a single flat coil and a secondary winding (29) of a single flat coil, galvanically isolated from each other by a dividing plate (11, 18) and wound around a central core (30) as well as being encapsulated in an enveloping layer (7, 8, 9, 27) of ferromagnetic material.

As a result of this planar configuration of the transformer ample surfaces are available to ensure its efficacious cooling to allow the support of naturally cooling or lightly ventilating radiators.

## Description

The present invention refers to a converter unit for electric railway applications incorporating a planar transformer having an improved and innovative structure.

More particularly, but not exclusively, the invention is concerned with a direct current converter unit for industrial applications that involve high transformer voltages, for example in railway applications, but the following description refers to this specific area of application only with the aim of simplifying the explanation.

The invention has a particular area of application in railway engines of the tram-train type, which currently represent one of the most effective solutions for the future of local mobility and traffic reduction in historical city centres.

### Prior art

As is well known the pressing need to find effective solutions to problems of urban and suburban mobility has caused the tram to make a comeback as one of the easiest solutions to adopt and implement within the context of city development for the future, either to integrate with or to replace tyre-based surface transport systems.

Furthermore the need to reduce noxious emissions makes it practically an obligation that public transport vehicles be used that can transport a great number of passengers at highly contained costs per passenger.

Also to be noted is the fact that technological progress has made it possible to make railway vehicles or so-called tram-train vehicles that offer a high level of driving comfort with very regular accelerations and decelerations, a noise emission level that is lower than that of combustion engine buses, energy recovery features during braking and descent, and that are equipped with electrical engines that are sufficiently powerful to easily deal with upward slopes.

All these undeniable advantages make the renewed diffusion of railway transport current again, in particular articulated, bi-directional tram-trains that are meant to serve also extra-urban routes with a relatively high number of curves.

These tram-trains are nevertheless required to maximise the space dedicated to passengers at the expense of the equipment and instrumentation intended for electrical conversion and power output for traction.

To optimise the use of the space intended for the electrical current conversion equipment it is necessary to use transformers of particularly small dimensions and, more particularly, of transformers that can be integrated easily into the construction of the converter.

As is well known the transformer is an electrical device whose operation is based on the phenomenon of electromagnetic induction, as studied by Faraday.

It is also well known that the operational principle of a wound transformer includes a primary winding and a secondary winding that are galvanically isolated from each other but coupled by electromagnetic induction. The main characteristic of a transformer is that it modifies the value of the output voltages and currents present in the secondary winding, with respect to the input values applied to the primary winding. The transformation occurs with the value of electrical power kept constant.

In the course of recent years there has been a steady progress in the design and manufacturing of transformers of ever smaller weight and size; examples are the transformers used to charge the batteries of portable electronic devices. However, the reason why it has been possible to reduce the dimensions and the volume of these kinds of transformers over time is the fact that the electric power involved is low voltage.

This is not the case, however, for the large transformers used in industrial applications that involve high-voltage electrical currents, such as, for example, the transformers used in the converter units of train engines. For this type of electrical device it seems as if progress has been much slower due to obvious technical problems that have made it impossible to compress the dimensions and weight of power transformers at low and medium transformation frequencies.

It is clear that the availability of transformers of reduced weight and volume would represent a great innovation, for instance in the specific field of general railway transport and more particularly in the specific area of suburban trains or tram-trains.

The advantages of the possible availability of transformers of smaller dimensions for the power supply to auxiliary systems are obvious; in fact, more available space while retaining the same level of transformed electrical power would allow for a better planning of all of the converter unit equipment and all the necessary components for this kind of application. The reduced overall volume of the converter unit would furthermore permit electrically powered vehicles, such as tram-train or suburban train engines, to have more available space for passengers while external dimensions remain the same.

More particularly, transformers that are particularly compact could prove very useful in the application in converter units that become integrated parts, for example in a wall, on the floor or in a cover. Furthermore this would create an additional external surface when compared to traditional solutions, but with the same weight, which is beneficial to natural heat dissipation.

Prior art shows that for a long time there have been attempts to solve these problems, but the solutions presented by the industry have so far proven to be unsatisfactory responses to the question. For example, a planar transformer of a known type, intended for applications of relatively high voltage transformation, is described in the patent US 5,835,367 and in the European patent 1 782 441.

Although they do present a number of advantages in terms of output, the solutions described in these prior art documents do not allow one to obtain a high level performance while remaining fairly contained in overall volume.

The technical problem at the basis of the present invention is that of devising a transformer of improved structure that will take up a particularly reduced amount of space while still being capable of delivering the same amount of transformed electricity, and that can effectively be used in converter units for the supply of power to auxiliary systems of railway engines.

Another aim of the present invention is that of making available a transformer of the above-mentioned type having structural and functional characteristics that allow the transformer to be used in applications of transformation of high voltages of 3 kV or higher in direct current.

A final aim of the present invention is that of devising a transformer with a particularly compact structure that is capable of having extremely low flux dispersion, that is silent and that has a large outer surface at the same weight, thereby favouring natural heat dissipation with reduced heating up as a result.

### Summary of the invention

The idea behind the solution that is the basis of the present invention is that of a converter unit, for example for the power supply of auxiliary systems in electric railway engines, that incorporates a transformer that benefits from a particularly efficient electromagnetic circuit that increases transformer capacity by using an encapsulation of the primary and secondary circuits inside an external sleeve made of a ferromagnetic material; this particular structure produces a magnetic flux in the core, which, having for the greater part flux linkage with both windings, induces a voltage in the windings that is equal for each coil. Such a transformer is then inserted into an LC circuit of a converter unit incorporating at least one bridge circuit with power switches.

On the basis of this idea for a solution the technical problem is solved by a converter unit for electric railway applications incorporating at least one power switch bridge circuit and an output LC circuit for the switch bridge incorporating a transformer inserted in series with an inductive and a capacitive component, characterised by the fact that the transformer is of a planar type that comprises a primary winding of a single flat coil and a secondary winding of a single flat coil, galvanically isolated from each other and wound around a central core as well as being encapsulated in an enveloping layer of ferromagnetic material.

Advantageously the respective separate flat coils that form the primary and secondary windings are parallel to each other and located on respective isolating dividing plates.

It should be noted that each single flat coil has a square or rectangular form with rounded edges and that the enveloping layer of ferromagnetic material is contained by the flattened box-shaped enclosure.

Furthermore the enveloping layer of ferromagnetic material comprises a flat covering layer, as well as lateral sides.

A protective enclosure comprises a base with raised lateral sides and a cover that is connected to the base with surrounding edges that cover the sides of the base in a box-like manner. Basically the base and the cover are coupled to create a box-like enclosure of a square or rectangular shape and of particularly little volume.

The structure of the planar transformer according to the invention envisages the use of a flat dividing plate for each of the primary and secondary windings, made of an electrically isolating material and having ribs to define seats to receive the adjacent turns of said windings.

Each flat dividing plate has a central hole to receive the above-mentioned transformer core.

More particularly the internal edges of the plates that delimit the central though-holes define a central, square and round-edged compartment in which the transformer core is accommodated.

The characteristics and advantages of the converter unit incorporating the planar transformer according to the present invention will become clear from the following description of an example embodiment given by way of non-limiting example, with reference to the enclosed figures.

### Brief description of the drawings

Figure 1 shows a perspective view of a converter unit made in accordance with the present invention for railway applications, in particular for use in electrically powered tram-trains and for the transformation of at least 3kV to 750 V;
Figure 2 show a schematic view of the modular cell structure of the circuitry of the converter unit according to the invention, in which the insertion diagram of a planar transformer according to the present invention is visible;
Figure 3 shows a schematic view of a detail of the circuitry structure of the converter unit of figure 2;
Figure 4 shows a perspective view of a planar transformer according to the present invention and incorporated into the converter unit of figure 1 for the transformation of high voltage electricity of at least 3kV to 750V;
Figure 5 shows a perspective view of a detail of the enclosure that contains the planar transformer according to the invention;
Figures 6 to 14 respectively show perspective views of the manufacturing steps of the planar transformer of figure 4.

### Detailed description

With reference to these figures, the number 1 globally and schematically refers to a direct current converter unit according to the present invention for electric railway applications.

More particularly the converter unit 1 is particularly suited for the equipping of so-called tram-trains of recent conception to supply the engine of the tram-train and all the components and instruments for movement, steering and lighting with electrical power.

Of course nothing prevents the converter unit according to the present invention from being used in other areas of application where there is a need to transform efficaciously and efficiently high voltage electricity, for example of at least 250 kW from at least 3kV to 750V, without implying any limitation of the rights of the applicant.

The converter unit 1 comprises a modular cell conversion structure 2. There are cells 2 of greater dimensions and volume, intended for the conversion of higher voltages, for example of 3kV, which we will call 3kV cells. There are also cells 6 of smaller dimensions and volume, intended for the conversion of lower voltages, for example 750V, which we will call 750V cells.

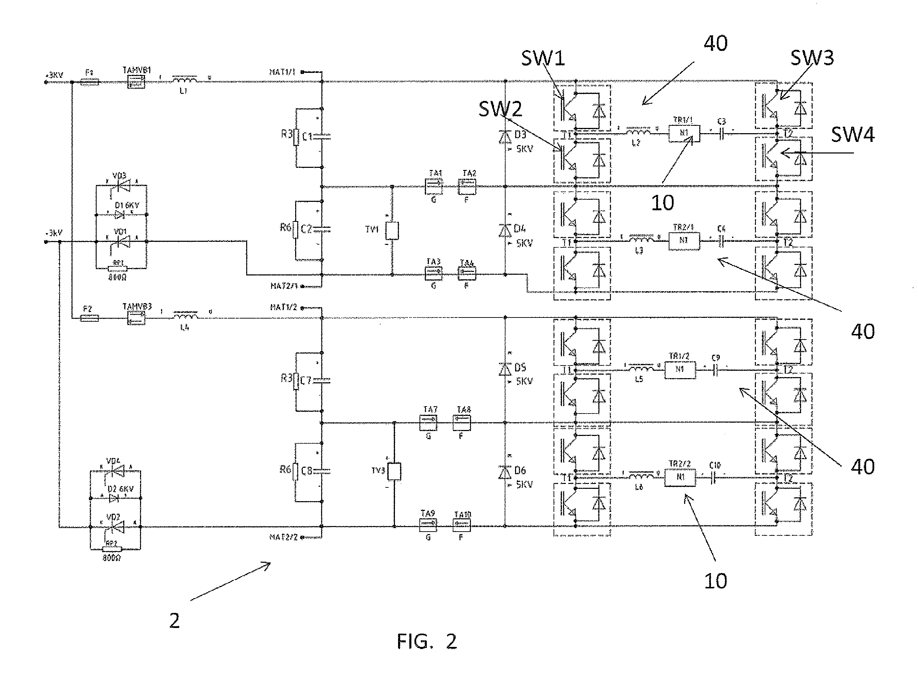

Each cell 2 comprises a series of circuit components schematically illustrated in figure 2, and planar transformers 10 with an improved structure, which will be illustrated in the following description.

Each cell 2 is conventionally equipped with multiple closely located cooling wings 4.

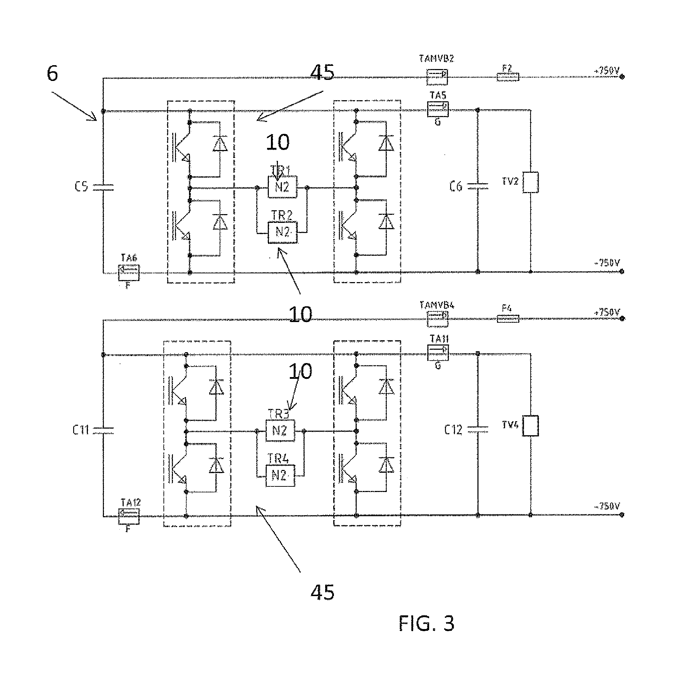

Analogously the 750V cells 6 have an externally similar but more compact structure and they differ from the previous 3kV cells 2 in that they have internal circuit components illustrated in the example of figure 3.

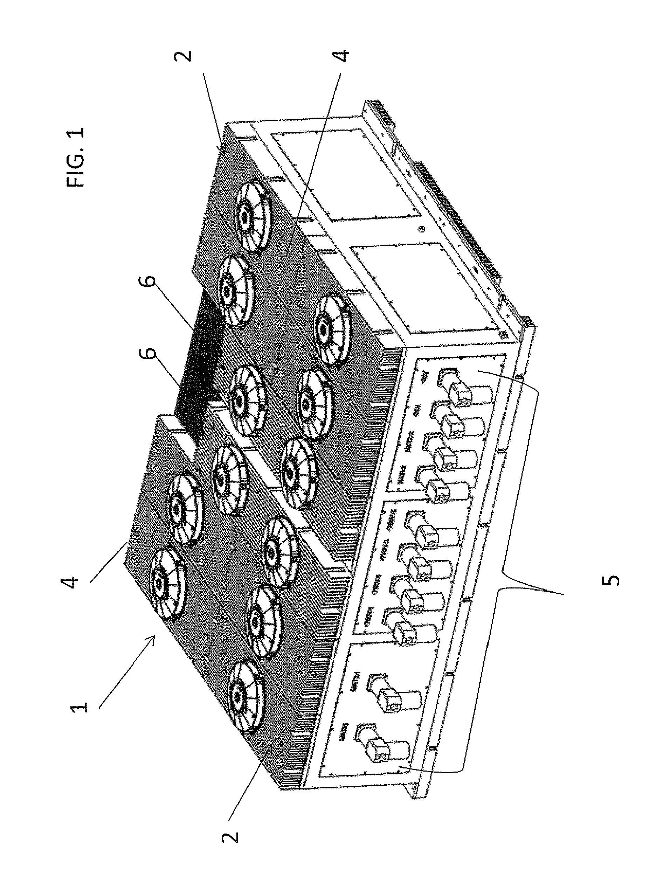

A plurality 5 of input and output terminals is visible in figure 1 on one side of the converter 1. These terminals 5 correspond to the circuit nodes that are visible in the diagrams of figures 2 and 3 and to which the ends of the internal input and output circuitry of the converter 1 are connected.

In each 3kV conversion cell 2 there is a conversion group comprising a power converter bridge circuit 40.

Essentially a convertor comprises at least one power semiconductor bridge circuit, whose output powers an LC circuit in series with a winding of the transformer, for example the primary winding. In the employed configuration most adapted to the aims of the invention also the other transformer winding is symmetrically connected to a power semiconductor bridge circuit and the converter is therefore able to transmit energy in both directions, being as a result reversible. Each converter bridge 40 incorporates four switches SW1, SW2, SW3 and SW4, for example IGBTs.

As is well known IGBT transistors conventionally consist of a predetermined number of power transistors connected in parallel and a recycling diode.

The input of the converter bridge 40 receives a relatively high direct current of at least 3kV/2.

A suitable adjustment circuit controls the modulation of the signal applied to the base of the IGBT transistors.

Advantageously, according to the invention, the output voltage of the converter bridge 40 is applied to an output circuit that comprises an LC circuit and a (primary) winding of the planar transformer 10 according to the invention and described in detail below.

The transformer 10 guarantees the galvanic isolation between input and output of each conversion unit of each cell 2.

With reference now to the example of figure 3, the number 45 indicates a power converter bridge circuit with a structure similar to the one illustrated previously in figure 2, but intended for the power conversion of the other (secondary) windings of 750V direct current.

The particular difference between this converter bridge 45 and the previous converter bridge 40 consists in the fact that the output is applied to the secondary windings of the two transformers 10 in parallel, respectively powered by the cells 2, TR1 and TR2 for the first bridge circuit 45 and TR3 and TR4 for the second bridge circuit 45. The bridge circuits act as rectifiers of the power that flows through the transformers and they produce a direct current of 750V. The functional symmetry between the diagrams of the converters 45 of figure 3 and the converters 40 of figure 2 means that the functions can be inverted, as does in fact occur, and that with a suitable control of the semiconductors the converter can also transfer energy from the 750V circuit to the 3kV circuit. As mentioned earlier the converter of the present invention is reversible, and advantageously allows energy to be recovered during braking and during the descent or downhill travel.

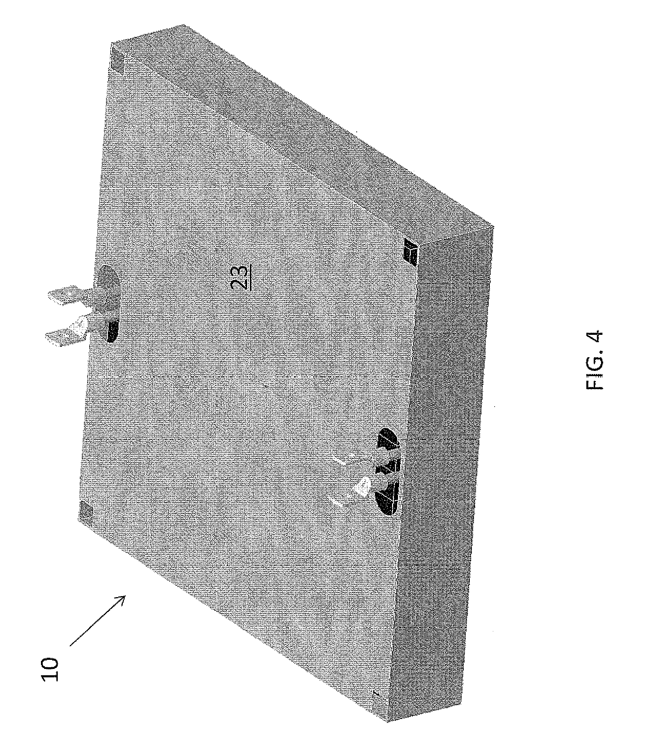

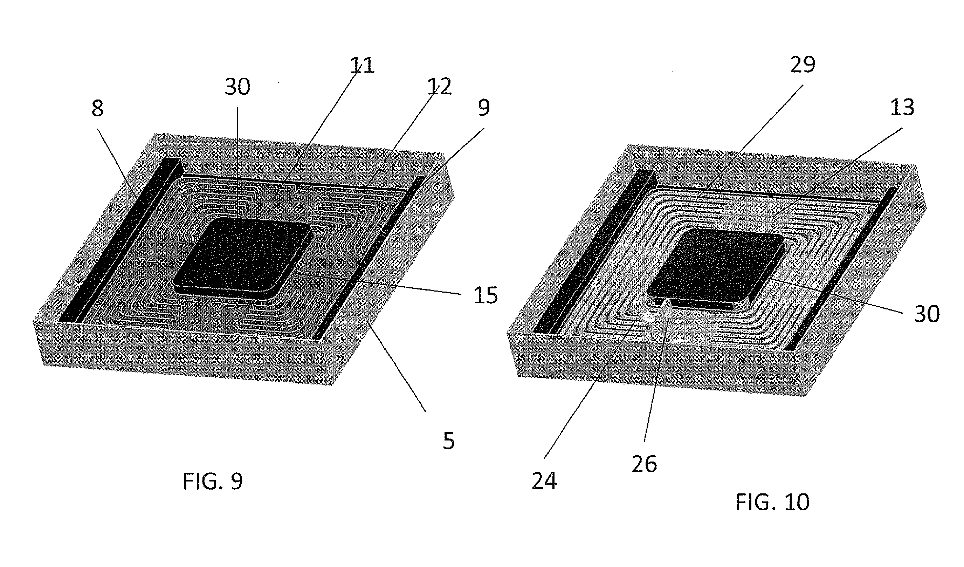

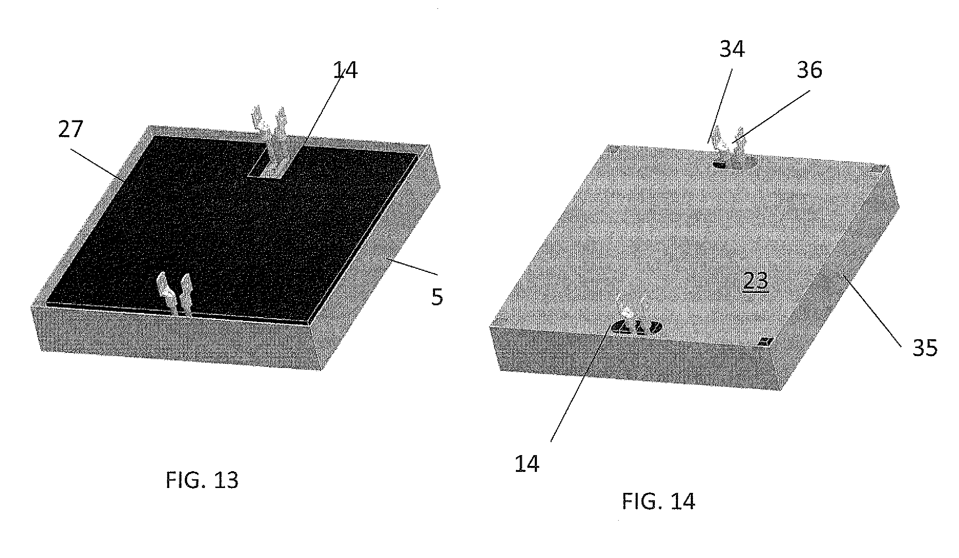

Now, with particular reference to the example embodiments of figures 4 to 14, the number 10 globally and schematically indicates a planar transformer according to the present invention.

The transformer 10 conventionally comprises a primary winding circuit 28 and a secondary winding circuit 29, galvanically isolated from each other and wound around a core 30, as will be described below.

The primary circuit 28 is a wound flat single coil on a dividing plate that lends isolating support, and the same conformation of a flat single coil is applied to the secondary winding 29. The two primary 28 and secondary 29 windings are located parallel to each other on parallel planes and each comprises a first central coil that starts the winding that is wound around a central core that is shared by the two windings.

Advantageously, according to the invention the two primary 28 and secondary 29 winding circuits are encapsulated or enveloped inside a perimeter layer of ferromagnetic material that is also in contact with the central core, as will be described in detail below when illustrating the operational steps of the manufacturing of the planar transformer according to the present invention.

The transformer 10 has a prismatic structure that presents itself externally as a parallelepiped with a square or rectangular and flattened shape.

The square and flattened shape is given by an enclosure 20 that comprises a base 33 and a cover 23 that close over one another like a box. Of course nothing prevents the adoption of other flattened polygonal shapes according to necessity.

By way of non-limiting example we point out that the dimensions of the enclosure 20 are 450 mm long, 400 mm wide and 90 mm high, with a total weight of 60 kg. Even with these particularly restrained dimensions it is possible to transform up to 135 kW of electrical power.

However, it should be noted that other dimensions may be adopted, according to the needs of transformation, more particularly according to the electrical power that needs to be transformed. For example, a transformer according to the invention, contained in an enclosure 20 of 570 mm long, 520 mm wide and 90 mm high for a total weight of 105 kg will allow the transformation of up to 250 kW of electrical power.

By adjusting the dimensions and the number of turns in the circuits of the primary and secondary windings it is possible to obtain electrical power conversions of between 100 kW and 500 kW.

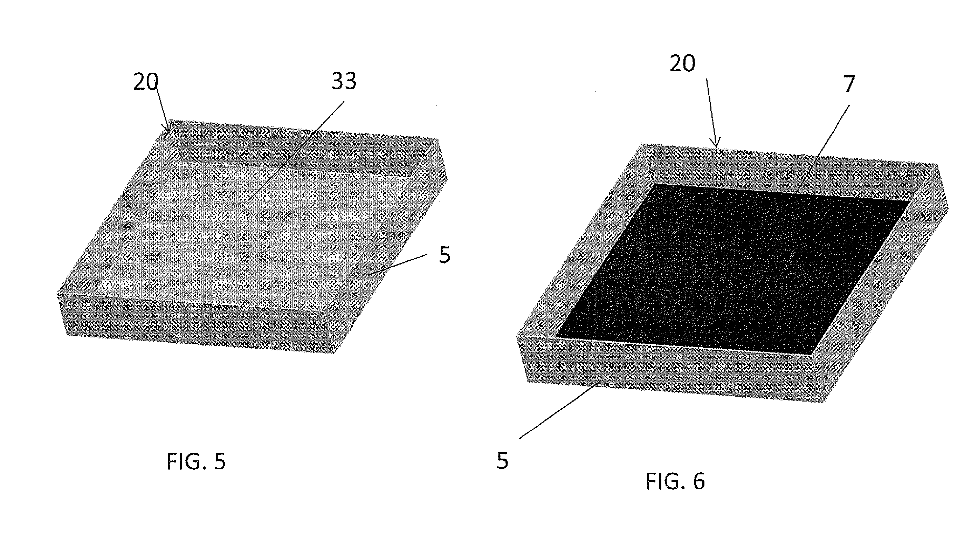

Figure 5 shows the sole base 33 of an enclosure 20 that contains the whole of the transformer 10.

The base 33 is substantially a flat, square-shaped tray with surrounding sides or edges 5 of containment.

At the bottom of the base 33 there is a flat layer 7 consisting of compacted ferromagnetic material that covers the whole of the surface of the square-shaped tray, as shown in figure 6.

This flat bottom layer 7 is preferably made of a ferromagnetic material, for example of artificial ceramic ferrites. However, nothing prevents the use of other ferromagnetic materials without this implying any limitation of the applicant's rights, just as the fact that this ferromagnetic material may be either be monolithic or be made as a plurality of bundled and regularly stacked foils should not represent a limitation either.

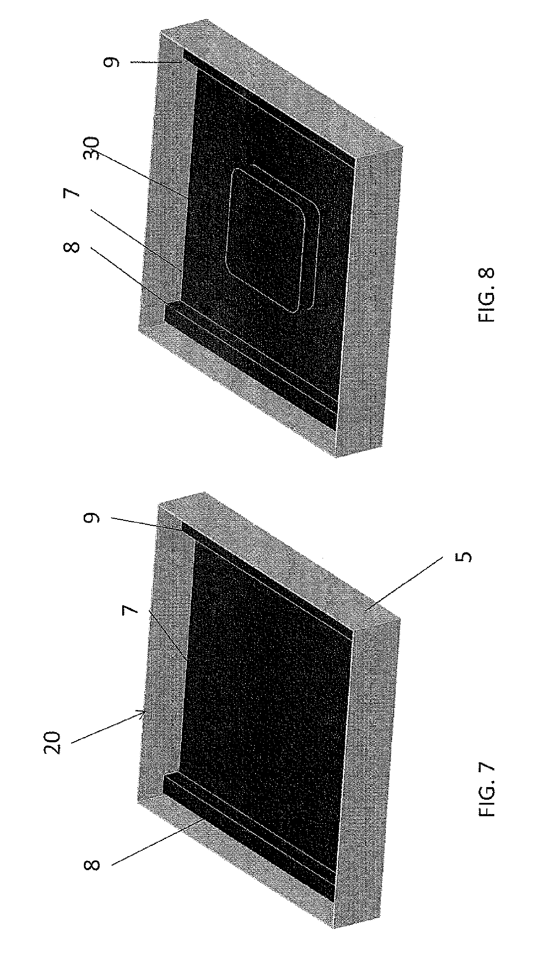

Advantageously, as is shown quite well in figure 7, at least two opposite ridges 8 and 9 up against or attached to the opposite sides 5 of the base 33 are covered by the same ferromagnetic material of layer 7 that covers the bottom surface of the base 33.

The ferromagnetic material against the two opposite ridges 8, 9 substantially forms two peripheral strips that are never higher than the height of the sides 5.

Above the layer 7 there is a first plate 11 made of an electrically isolating material, for example a synthetic plastic material. The plate 11 is obtained by moulding and it represents a galvanic isolation element for the circuit of the secondary winding 29 of the transformer 10.

The shape of the plate 11 matches the base 33 of the enclosure 20 but it has slightly smaller dimensions so that it can be mounted above the ferromagnetic material 7 between the two lateral ridges 8, 9. A notch 14 is provided in a covering layer of the ferromagnetic material near one of the edges of the cover 23 to allow a contact terminal of the secondary circuit 29 to pass through, as will be described below.

The square shape of the plate 11 is merely given as a non-limiting illustration and nothing prevents the adoption of other forms, which would moreover not imply any moving away from the basics of the present invention.

On the plate 11 a plurality of ribs 12 is formed that protrude perpendicularly from the plane of the plate and that extend at parallel angles between them in correspondence with the four corners of the plate 11.

Together these ribs 12 define seats to receive a conductor 13 of the secondary winding 29.

In a preferred embodiment the conductor 13 has a cross section diameter of at least 12 mm. Obviously conductors with smaller or larger diameters will also be used, in accordance with the needs of transformation and of the electrical power that is managed by the transformer 10 according to the present invention.

The plate 11 has at its centre a through-hole 15, square in shape and with rounded edges.

The conductor 13 is coiled and each winding is received in a corresponding seat defined by two adjacent ribs 12 and the opposite extremities 24 and 26 of the conductor that represents the secondary winding circuit 29 are extended through the notch 14 to be accessible from outside of the enclosure 20 as contact terminals of the secondary winding 29.

Above the plate 11 there is a second plate 18 made of electrically isolating material and having substantially the same structure as the first plate 11. This second plate 18 represents a further wall or bulkhead of galvanic isolation for the primary winding circuit 28.

Therefore also the second plate 18 is made monolithically of an electrically isolating material, and in turn it presents a plurality of ribs 19 that define respective seats to receive a conductor of the primary winding 28.

Also this second plate 18 has at its centre a through-hole 17, square in shape and with rounded edges, that coincides and lines up perfectly with the through-hole 15 of the first plate 11.

The internal edges of the plates 11 and 18 that delimit the holes 15 and 17, define a central compartment through which the core 30 of the transformer 10 passes.

The central hole 15 of the first plate 11 and the central hole 17 of the second plate furthermore give access to the underlying layer 7 of ferromagnetic material. A filling of the same ferromagnetic material forms the core 30 that completely and in a compact manner fills the central compartment delimited by the internal edges of the plates 11 and 18, as shown in figure 6 and following.

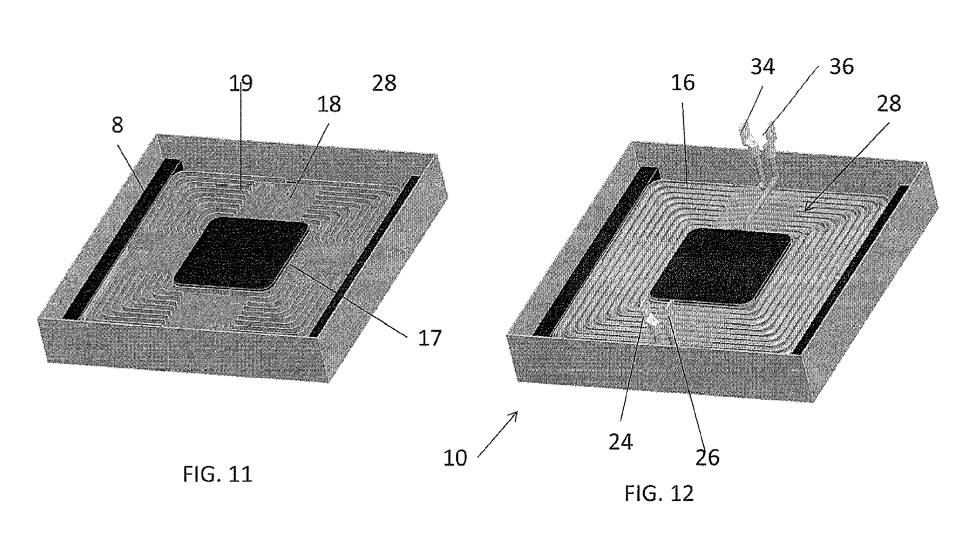

Also the conductor 16 of the primary winding 28 is coiled and each winding is received in a corresponding seat defined by two adjacent ribs of the second plate 18 and the opposite extremities 34 and 36 of this second conductor that represents the primary winding 28 are in turn extended outside of the enclosure 20 as contact terminals of the secondary of the transformer 10, as shown in figure 12.

In a preferred embodiment the conductor 16 has a cross section diameter of at least 9 mm. Obviously conductors with smaller or larger diameters will also be used, in accordance with the needs of transformation and of the electrical power that is managed by the transformer 10.

It should be noted that the number of turns of the secondary winding 29 is equal to around 50% of the number of turns of the primary winding 28.

Above the second plate 18 there is a flat layer 27 of the same compact covering ferromagnetic material as that of the first layer 7 and of the lateral ridges 8 and 9.

This further layer 27 of ferromagnetic material (i.e. ferrites) substantially closes the structure of the transformer to join with the upper extremity of the ridges 8 and 9, to form together with these a uniform and perimetrical layer of ferromagnetic material that encapsulates or envelops the windings 28 and 29 of the transformer 10.

From the above description it emerges quite clearly that the structure of the transformer 10 is substantially reversible and that the description presented previously coincides substantially with a bottom up assembly method.

In this regard the final structure of the transformer is completed by the cover 23 that closes and completes the enclosure 20, having a form that matches the base 33 and external perimetrical edges 35 that close over the sides 5 of the base 33 in a box-like manner.

The transformer 10 according to the present invention has the unwonted advantage of having a structure that is particularly compact and that also allows the overall number of turns both in the primary winding circuit 28 and in the secondary winding circuit 29 to be reduced. This characteristic allows the windings to be substantially shorter in comparison to transformers known from the prior art, thereby reducing losses both in the conductors and in the core.

It should be noted that in the transformer according to the invention the use of space is optimised, thereby drastically reducing the amount of space unused by its components, windings, galvanic isolation or the core.

Another important characteristic is the fact that the turns of each of the primary 28 and secondary 29 windings induce an electromagnetic force in the immediately adjacent winding. Thanks to this characteristic the performance of the transformer is optimised and outputs are obtained that used to be inconceivable for electric devices of this kind.

Experiments performed by the applicant have led to the supposition that the excellent performance results of the converter unit incorporating the previously described transformer also depend on the direct coupling over the air of a part of the magnetic flux that is generated in the separate turns of its two windings, which are extremely near each other. This flux performs its function without involving the magnetic core and without producing any losses due to hysteresis. The tight coupling between the two windings, close to that of the theoretically ideal transformer, reduces the voltage drop between primary and secondary winding (which instead occurs in traditional transformers) and allows the frequency of the LC resonant circuit that characterises the functional frequency of the convertor not to be disrupted.

It should also be remarked that the ferrite box in which the transformer is substantially enclosed, impedes the diffusion of magnetic fields towards the outside and makes it possible to install other electronic devices at signal level in the proximity of the transformer, without any interference.

Experiments by the applicant have been able to show that the transformer according to the invention has greatly reduced flux losses and that the resonance frequency is particularly stable.

Finally it should be remarked that due to the planar construction of the transformer ample surfaces are available to ensure its efficacious cooling to allow the support of naturally cooling or lightly ventilating radiators.

The macroscopic effect of this remarkable feature is the fact that the transformer is relatively "cool" during operation, which will certainly improve the performance of the converter unit that contains these transformers and which constitutes a further advantage in that it substantially increases the possibilities for application of these converter units in the most wide-ranging technical areas.

Its compactness, solidity and silence, together with the above-mentioned characteristic of showing little heating, makes the transformer according to the present invention particularly apt for a wide range of industrial and civil applications, and in particular for the power supply of engines, auxiliary services and substations in the field of railway transport, both on board and on the ground, for power generation ranging from 500kW to 1 MW.

## Claims

1. Converter unit (1) for electric railway applications incorporating at least one power switch bridge circuit (40) and an output LC circuit for the switch bridge circuit (40) having a transformer (10) inserted in series with an inductive and a capacitive component, **characterised in that** the transformer is of the planar type and that it that comprises a primary winding (28) of a single flat coil and a secondary winding (29) of a single flat coil, galvanically isolated from each other by a dividing plate (11, 18) and wound around a central core (30) as well as being encapsulated in a enveloping layer (7, 8, 9, 27) of ferromagnetic material.

2. Converter unit according to claim 1, **characterised in that** the respective single flat coils forming the primary (28) and the secondary (29) windings are parallel to each other and located on respective dividing plates (11, 18) of isolating support.

3. Converter unit according to claim 1, **characterised in that** said single flat coil has a square or rectangular shape with rounded edges and that the enveloping layer of ferromagnetic material is contained inside an enclosure (20) with a flattened box-like shape.

4. Converter unit according to claim 1, **characterised in that** said enveloping layer of ferromagnetic material comprises a flat bottom layer (7) and a flat covering layer (27) as well as lateral ridges (8, 9).

5. Converter unit according to claim 1, **characterised in that** it comprises a protective enclosure (20) comprising a base (33) with raised lateral sides (5) and a cover (23) connected to the base (33) with perimeter edges (35) that cover the sides (5) of the base (33) in a box-like manner.

6. Converter unit according to claim 5, **characterised in that** said base (33) and said cover (23) are coupled to create a box-like enclosure (20) of a square or rectangular and flattened shape.

7. Converter unit according to claim 1, **characterised in that** it comprises a flat dividing plate (11, 18) for each of the primary (28) or secondary (29) windings, made of an electrically isolating material and provided with ribs (12, 19) to define seats to receive adjacent turns of said windings (28, 29).

8. Converter unit according to claim 7, **characterised in that** each support plate (11, 18) has a through-hole (15, 17) at its centre for the transformer core (30).

9. Converter unit according to claim 8, **characterised in that** the internal edges of said plates (11, 18) that delimit the through-holes (15, 17) define a central square and round-edged compartment accommodating the core (30) of the transformer (1) adhering to the layers (7, 27) of ferromagnetic material that envelop the windings (28, 29).

10. Converter unit according to claim 1, **characterised in that** said ferromagnetic material is made with artificial ceramic ferrites.

11. Converter unit according to claim 10, **characterised in that** the conductor (13) of the secondary winding (29) has a diameter of at least 12 mm, whereas the conductor of the primary winding (28) has a diameter of at least 9 mm.

12. Converter unit according to claim 1, **characterised in that** the number of turns of the secondary winding (29) is equal to around 50% of the number of turns of the primary winding (28).

13. Converter unit according to claim 1, **characterised in that** it is capable of transforming electric power from between 100 kW to 500 kW for each transformer used.

14. Converter unit, **characterised in that** it comprises at least four switch bridge circuits (40), each incorporating at their output a planar transformer (10) according to any of the claims 1 to 13.

15. Converter unit according to claim 1, **characterised in that** it comprises a power switch bridge circuit connected to the secondary of the transformer and capable of functioning both as rectifier and as inverter, thereby allowing the flow of energy from the secondary circuit to the primary circuit.
